# EUROPÄISCHE PATENTSCHRIFT

(11) **EP 3 261 276 B1**
(45) Veröffentlichungstag und Bekanntmachung des Hinweises auf die Patenterteilung: **01.12.2021**
(21) Anmeldenummer: 16176235.6
(22) Anmeldetag: 24.06.2016
(51) Int. Cl.: H04J 14/02

(54) **VERFAHREN ZUR EFFIZIENTEREN DATENÜBERTRAGUNG IN EINEM OPTISCHEN TELEKOMMUNIKATIONSNETZ IM WELLENLÄNGEN-MULTIPLEX-BETRIEB, UND OPTISCHES TELEKOMMUNIKATIONSNETZ, COMPUTERPROGRAMM UND COMPUTERPROGRAMMPRODUKT**
METHOD FOR IMPROVING EFFICIENCY OF DATA TRANSMISSION IN AN OPTICAL TELECOMMUNICATION NETWORK IN WAVELENGTH MULTIPLEX AND OPTICAL TELECOMMUNICATION NETWORK, COMPUTER PROGRAM AND COMPUTER PROGRAM PRODUCT
PROCEDE DE TRANSMISSION DE DONNEES EFFICACE DANS UN RESEAU DE TELECOMMUNICATION OPTIQUE EN MODE MULTIPLEXAGE EN LONGUEUR D'ONDE ET UN RESEAU DE TELECOMMUNICATION OPTIQUE, PROGRAMME D'ORDINATEUR ET PRODUIT PROGRAMME D'ORDINATEUR

(43) Veröffentlichungstag der Anmeldung: 27.12.2017
(73) Patentinhaber: Deutsche Telekom AG, 53113 Bonn (DE)
(72) Erfinder: STREUPER, Olaf, 53639 Königswinter (DE)
(74) Vertreter: Schwöbel, Thilo K.

(56) Entgegenhaltungen:
- US-A1- 2004 107 382
- US-A1- 2014 099 109
- US-B1- 7 382 772
- GUANGZHI LI ET AL: "IP over optical cross-connect architectures [Topics in Optical Communications]", IEEE COMMUNICATIONS MAGAZINE, IEEE SERVICE CENTER, PISCATAWAY, US, Bd. 44, Nr. 2, 1. Februar 2007 (2007-02-01), Seiten 34-39, XP011168273, ISSN: 0163-6804
- None

## Beschreibung

### Stand der Technik

Die Erfindung betrifft ein Verfahren zur effizienteren Datenübertragung in einem optischen Telekommunikationsnetz im Wellenlängen-Multiplex-Betrieb (WDM, wavelength division multiplex) von verschiedenen optischen Wellenlängen, wobei das optische Telekommunikationsnetz einen ersten übergeordneten Netzknoten, einen zweiten übergeordneten Netzknoten und ferner wenigstens ein erstes Netzelement aufweist.

Die Erfindung betrifft ferner ein optisches Telekommunikationsnetz zur effizienteren Datenübertragung im Wellenlängen-Multiplex-Betrieb (WDM, wavelength division multiplex) von verschiedenen optischen Wellenlängen, wobei das optische Telekommunikationsnetz einen ersten übergeordneten Netzknoten, einen zweiten übergeordneten Netzknoten und ferner wenigstens ein Netzelement aufweist.

Ferner betrifft die Erfindung auch ein Computerprogramm mit Programmcodemitteln und ein Computerprogrammprodukt mit einem computerlesbaren Medium und einem auf dem computerlesbaren Medium gespeicherten Computerprogramm, die dazu geeignet sind, alle Schritte des erfindungsgemäßen Verfahrens auszuführen.

Verfahren zur Übertragung von Daten unter Nutzung von Lichtwellenleitern, d.h. unter Nutzung von optischen Telekommunikationsnetzen, sind allgemein bekannt. Beispielsweise gilt für viele breitbandige Telekommunikationsnetze, dass der überwiegende Teil der zu übertragenden Daten über optische Datenübertragungssysteme bzw. optische Telekommunikationsnetze, insbesondere unter Nutzung von Lichtwellenleitern, übertragen wird. Einsatz finden solche optischen Telekommunikationsnetze beispielsweise bei Aggregationsnetzen. Solche Aggregationsnetze, beispielsweise für Privatkundenverkehr, haben die Aufgabe, Verkehr von Regionalknoten zu Backbone-Knoten zu führen.

Es ist allgemein bekannt, in Aggregationsnetzen gemäß dem Stand der Technik auf der optischen Ebene/Schicht (Layer) eine optische Selbstheilungsfunktionalität (optical transport resilience) vorzusehen, indem redundante Internet Protokoll-Schnittstellen (IP connections) verwendet werden. Hierbei wird typischerweise für jede notwendige Verbindung zwischen zwei optischen Knoten wenigstens eine Internet Protokoll-Schnittstelle verwendet. Wenn eine Selbstheilungsfunktionalität für die gesamte Datentransportkapazität erreicht werden soll, wird demnach eine Überversorgung (bzw. eine Redundanz von Internet Protkoll-Schnittstellen) im Bereich von 100% der maximalen Datentransportkapazität benötigt. Dies stellt eine signifikante Verschwendung von teuren und elektrische Energie verbrauchenden Internet Protokoll-Schnittstellen dar. Durch die Verwendung von typischen optischen Netzwerkelementen (optical network devices) können zwar Fehler innerhalb des optischen Pfades abgedeckt werden, indem auf einen permanenten Backup-Pfade geschaltet wird, jedoch werden hierdurch keine Fehlerzustände von Netzknoten bzw. von übergeordneten Netzknoten (bzw. Routern) abgedeckt.

Ein Datenübertragungsverfahren nach dem Stand der Technik ist aus US-A-2004/107382 bekannt.

### Offenbarung der Erfindung

Der Erfindung liegt die Aufgabe zugrunde, ein Verfahren und ein optisches Telekommunikationsnetz sowie ein Computerprogramm und ein Computerprogrammprodukt zur Verfügung zu stellen, welches bei gleicher Ausfallsicherheit eine geringere Redundanz bzw. Überversorgung mit Internet Protkoll-Schnittstellen ermöglicht.

Diese Aufgabe wird erfindungsgemäß gelöst durch ein Verfahren zur effizienteren Datenübertragung in einem optischen Telekommunikationsnetz im Wellenlängen-Multiplex-Betrieb (WDM, wavelength division multiplex) von verschiedenen optischen Wellenlängen, wobei das optische Telekommunikationsnetz einen ersten übergeordneten Netzknoten, einen zweiten übergeordneten Netzknoten und ferner wenigstens ein erstes Netzelement aufweist, wobei das optische Telekommunikationsnetz eine optische Übertragungsstrecke umfassend mehrere optische Übertragungskanäle aufweist, wobei in einem Normalbetriebsmodus des optischen Telekommunikationsnetzes der erste übergeordnete Netzknoten und das erste Netzelement mittels eines optischen Übertragungskanals der optischen Übertragungsstrecke und einer ersten IP-Schnittstelle des ersten Netzelements miteinander verbunden sind und/oder der zweite übergeordnete Netzknoten und das erste Netzelement mittels eines optischen Übertragungskanals der optischen Übertragungsstrecke und einer zweiten IP-Schnittstelle des ersten Netzelements miteinander verbunden sind, wobei das optische Telekommunikationsnetz ferner einen weiteren übergeordneten Netzknoten aufweist, wobei das Verfahren den Schritt aufweist, dass in einem Fehlerfallbetriebsmodus - anstelle des ersten oder zweiten übergeordneten Netzknotens - der weitere übergeordnete Netzknoten und das erste Netzelement mittels der optischen Übertragungsstrecke und entweder der ersten IP-Schnittstelle und/oder der zweiten IP-Schnittstelle des ersten Netzelements miteinander verbunden werden, wobei wenigstens entweder die erste IP-Schnittstelle (151) oder die zweite IP-Schnittstelle (152) sowohl im Normalbetriebsmodus des optischen Telekommunikationsnetzes (100) als auch in dem Fehlerfallbetriebsmodus verwendet wird.

Es ist dadurch gemäß der vorliegenden Erfindung in vorteilhafter Weise möglich, dass wenigstens entweder die erste IP-Schnittstelle oder die zweite IP-Schnittstelle sowohl im Normalbetriebsmodus des optischen Telekommunikationsnetzes als auch in wenigstens einem Fehlerfallbetriebsmodus verwendet wird (bzw. sowohl die erste IP-Schnittstelle als auch die zweite IP-Schnittstelle in beiden Betriebsmodi verwendet werden). Hierdurch ist es somit erfindungsgemäß vorteilhaft möglich, teure IP-Schnittstellen für Netzelemente einzusparen, weil an den Netzelementen nicht solche IP-Schnittstellen vorgesehen sein müssen, die dezidiert nur für den Normalbetriebsmodus vorhanden sind, und zusätzlich solche IP-Schnittstellen vorgesehen sein müssen, die dezidiert nur für einen Fehlerfallbetriebsmodus (bzw. sogar für jeden zu betrachtenden Fehlerfallbetriebsmodus) vorhanden sind.

Erfindungsgemäß ist es vorgesehen, dass (hierarchisch) übergeordnete Netzknoten und (gegenüber diesen Netzknoten) hierarchisch untergeordnete Netzelemente über das optische Telekommunikationsnetz (d.h. mittels einer optischen Übertragungsstrecke) miteinander verbunden sind. Im Normalbetriebsmodus findet Datenverkehr zwischen einem Netzelement (auch als R1-Knoten bzw. R1-Router bezeichnet) und einem übergeordneten Netzknoten (auch als R2-Knoten bzw. R2-Router bezeichnet) statt. Hierzu ist es erfindungsgemäß (bezüglich des ersten Netzelements) vorgesehen, dass im Normalbetriebsmodus des Telekommunikationsnetzes der erste übergeordnete Netzknoten und das erste Netzelement mittels eines optischen Übertragungskanals der optischen Übertragungsstrecke und einer ersten IP-Schnittstelle des ersten Netzelements miteinander verbunden sind. Alternativ oder aber zusätzlich (etwa um bereits durch die Nutzung des ersten und zweiten übergeordneten Netzknotens ein höheres Maß an Ausfallsicherheit zu erreichen und/oder aber wenn auch im Normalbetriebsmodus oder in einem Normalbetriebsmodus (von mehreren Normalbetriebsmodi) zur Datenübertragung von oder zu dem ersten Netzelement sowohl der erste übergeordnete Netzknoten als auch der zweite übergeordnete Netzknoten Verwendung findet) kann das erste Netzelement (insbesondere zusätzlich zur Verbindung zum ersten übergeordneten Netzknoten) auch mit dem zweiten übergeordneten Netzknoten verbunden sein, d.h. der zweite übergeordnete Netzknoten und das erste Netzelement sind im Normalbetriebsmodus mittels eines optischen Übertragungskanals der optischen Übertragungsstrecke und einer zweiten IP-Schnittstelle des ersten Netzelements miteinander verbunden. In beiden dieser betrachteten Fälle bzw. Situationen (d.h. das erste Netzelement ist lediglich mit dem ersten übergeordneten Netzknoten (mittels der ersten IP-Schnittstelle) oder aber sowohl mit dem ersten übergeordneten Netzknoten (mittels der ersten IP-Schnittstelle) und mit dem zweiten übergeordneten Netzknoten (mittels der zweiten IP-Schnittstelle) verbunden) ist erfindungsgemäß vorgesehen, dass das optische Telekommunikationsnetz ferner einen weiteren übergeordneten Netzknoten aufweist.

Der weitere übergeordnete Netzknoten stellt hierbei eine Ersatzkapazität (hinsichtlich des ersten übergeordneten Netzknotens im ersten der beiden betrachteten Fälle bzw. hinsichtlich insbesondere des ersten und zweiten übergeordneten Netzknotens im zweiten der beiden betrachten Fälle) insbesondere für eine Fehlersituation des optischen Telekommunikationsnetzes dar.

In einer solchen Fehlersituation des optischen Telekommunikationsnetzes (d.h. im Fall eines Fehlerfallbetriebsmodus; jedenfalls bezogen auf den ersten übergeordneten Netzknoten (gemäß der ersten betrachteten Situation) oder aber bezogen auf die Gesamtheit aus dem ersten übergeordneten Netzknoten und dem zweiten übergeordneten Netzknoten (gemäß der zweiten betrachteten Situation)) ist es erfindungsgemäß vorgesehen, dass - anstelle des ersten und/oder zweiten übergeordneten Netzknotens - der weitere übergeordnete Netzknoten und das erste Netzelement mittels der optischen Übertragungsstrecke und entweder der ersten IP-Schnittstelle und/oder der zweiten IP-Schnittstelle des ersten Netzelements miteinander verbunden werden.

Das bedeutet, dass die erste IP-Schnittstelle (oder aber die zweite IP-Schnittstelle oder aber sowohl die erste als auch die zweite IP-Schnittstelle) sowohl im Normalbetriebsmodus als auch im hier betrachteten Fehlerfallbetriebsmodus (d.h. bezogen auf den ersten übergeordneten Netzknoten oder aber bezogen auf die Gesamtheit aus dem ersten übergeordneten Netzknoten und dem zweiten übergeordneten Netzknoten) verwendet wird und somit keine weitere IP-Schnittstelle vorgesehen sein muss bzw. keine weiteren IP-Schnittstellen (die dezidiert lediglich für den betrachteten Fehlerfallbetriebsmodus Verwendung finden) vorgesehen sein müssen.

Der zweite hier betrachtete Fall bzw. die zweite Situation (d.h. das erste Netzelement ist sowohl mit dem ersten übergeordneten Netzknoten als auch mit dem zweiten übergeordneten Netzknoten verbunden) bezieht sich insbesondere auf eine Konfiguration des optischen Telekommunikationsnetzes mit einer ringförmig geschlossenen optischen Übertragungsstrecke (d.h. in Form eines optischen Rings bzw. eines Rings einer Glasfaserstrecke bzw. Glasfaserleitung), die den ersten übergeordneten Netzknoten, den zweiten übergeordneten Netzknoten und ferner eine Mehrzahl von Netzelementen (d.h. insbesondere das erste Netzelement) aufweist. Durch den in dieser Konfiguration vorgesehenen Ringschluss ist es möglich, dass es auch einem Fehlerfall (etwa ein Faserbruch) innerhalb eines solchen Rings einen (nicht fehlerbehafteten) Weg zur Durchführung der Datenübertragung zwischen der jeweiligen Quelle der Daten und dem jeweiligen Ziel der Daten (d.h. zwischen dem ersten Netzelement einerseits und entweder dem ersten übergeordneten Netzknoten oder aber dem zweiten übergeordneten Netzknoten andererseits) gibt. Ein solcher Fehlerfall innerhalb eines solchen optischen Rings (unter Einschluss des ersten und zweiten übergeordneten Netzknotens entspricht jedoch keinem Fehlerfallbetriebsmodus gemäß der vorliegenden Erfindung, weil die Kapazität bzw. Funktionalität des weiteren übergeordneten Netzknotens nicht benötigt wird (d.h. der nachgefragte Datenverkehr mittels des ersten und zweiten übergeordneten Netzknotens abgewickelt werden kann). Falls jedoch eine Störung nicht (lediglich) auf der optischen Ebene (bzw. Schicht), sondern auf der Ebene des ersten übergeordneten Netzknotens oder aber sowohl des ersten als auch des zweiten übergeordneten Netzknotens vorliegt (d.h. im Falle eines im Rahmen der vorliegenden Erfindung zu betrachtenden Fehlerfallbetriebsmodus), ist es erfindungsgemäß notwendig, das erste Netzelement und den weiteren übergeordneten Netzknoten mittels der optischen Übertragungsstrecke miteinander zu verbinden.

Typischerweise weist das optische Telekommunikationsnetz bzw. der Glasfaserring eine Vielzahl von Netzelementen auf, welche auch als sogenannte R1-Router bzw. als (regionale) Aggregationsknoten bezeichnet werden und für ein bestimmte Region die Anbindung der in der (Netzwerk-)Hierarchie darunter angeordneten Netzelemente an das Backbone-Netz gewährleisten. Ferner weist das optische Telekommunikationsnetz den ersten übergeordneten Netzknoten und den weiteren übergeordneten Netzknoten auf. Alternativ dazu weist das optische Telekommunikationsnetz den ersten übergeordneten Netzknoten und den zweiten übergeordneten Netzknoten und den weiteren übergeordneten Netzknoten auf. Die übergeordneten Netzknoten werden als R2-Router bzw. als Backbone-Router bezeichnet. Wenn der erste und zweite übergeordnete Netzknoten Teil des optischen Telekommunikationsnetzes bzw. Teil der optischen Übertragungsstrecke ist, ist es möglich, dass das Backbone-Netz in einer A&B-Netzstruktur- bzw. mit einer (bezüglich dem ersten und zweiten übergeordneten Netzknoten) gedoppelten Struktur - betrieben wird. Hierdurch ist es möglich, dass sich beide Netzteile gegenseitig schützen, jedoch bezieht sich dies lediglich auf einen Ausfall der optischen Übertragungsstrecke, nicht auf einen Router-Ausfall. In diesem Fall einer A&B-Netzstruktur weist das Telekommunikationsnetz die optische Übertragungsstrecke als eine topologisch ringförmig geschlossene (sowie bidirektionale, d.h. auf jedem Streckenabschnitt bidirektional nutzbare) optische Übertragungsstrecke auf, wobei das optische Telekommunikationsnetz hinsichtlich des ersten und zweiten übergeordneten Netzknotens insbesondere symmetrisch ist, d.h. die Rollen des ersten und zweiten übergeordneten Netzknotens können insbesondere vertauscht werden.

Gemäß einer Ausführungsform der vorliegenden Erfindung ist es vorgesehen, dass der erste und/oder zweite übergeordnete Netzknoten wenigstens einen optischen Schalter zur Umschaltung zwischen dem Normalbetriebsmodus und dem Fehlerfallbetriebsmodus aufweist oder der erste und/oder zweite übergeordnete Netzknoten mit einem optischen Schalter zur Umschaltung zwischen dem Normalbetriebsmodus und dem Fehlerfallbetriebsmodus verbunden oder diesem zugeordnet ist.

Mittels des wenigstens einen optischen Schalters ist es erfindungsgemäß in vorteilhafter Weise möglich, dass vergleichsweise schnell eine Umschaltung der Verbindung (weiterhin unter Verwendung der ersten IP-Schnittstelle und/oder unter Verwendung der zweiten IP-Schnittstelle, jedenfalls aber unter Verwendung einer IP-Schnittstelle, die auch bereits im Normalfallbetriebsmodus verwendet wurde) zwischen dem ersten Netzelement einerseits und dem weiteren übergeordneten Netzknoten andererseits erfolgt. Hierdurch kann durch die Umschaltung des optischen Pfades die IP-Verbindung wiederhergestellt werden, indem zum weiteren übergeordneten Netzknoten umgeschaltet wird. Es ist hierdurch in vorteilhafter Weise (gegenüber herkömmlicherweise bekannten Aggregationsnetzen mit optische Selbstheilungsfunktionalität) möglich, auf eine Redundanz von IP-Schnittstellen zu verzichten und somit die Anzahl der verwendeten bzw. im optischen Telekommunikationsnetz verbauten IP-Schnittstellen zu reduzieren.

Gemäß einer weiteren Ausführungsform der vorliegenden Erfindung ist es vorgesehen, dass der wenigstens eine optische Schalter ein Detektionsmittel zur Detektion des Verlusts oder des Ausfalls eines vom ersten übergeordneten Netzknoten und/oder vom zweiten übergeordneten Netzknoten stammenden Signals aufweist, wobei im Fall der Detektion des Verlusts oder des Ausfalls des vom ersten übergeordneten Netzknoten stammenden Signals der wenigstens eine optische Schalter derart angesteuert wird, dass eine Umschaltung der Datenübertragung - anstelle vom und/oder zum ersten übergeordneten Netzknoten - vom und/oder zum weiteren übergeordneten Netzknoten und/oder vom und/oder zum zweiten übergeordneten Netzknoten erfolgt, oder wobei im Fall der Detektion des Verlusts oder des Ausfalls des vom zweiten übergeordneten Netzknoten stammenden Signals der wenigstens eine optische Schalter derart angesteuert wird, dass eine Umschaltung der Datenübertragung - anstelle vom und/oder zum zweiten übergeordneten Netzknoten - vom und/oder zum weiteren übergeordneten Netzknoten oder vom und/oder zum ersten übergeordneten Netzknoten erfolgt.

Dadurch, dass der optische Schalter ein Detektionsmittel zur Detektion des Verlusts oder des Ausfalls eines vom ersten übergeordneten Netzknoten und/oder vom zweiten übergeordneten Netzknoten stammenden Signals aufweist, ist es erfindungsgemäß vorteilhaft möglich, dass mittels des Detektionsmittels detektiert werden kann, ob ein Fehlerfallbetriebsmodus vorliegt oder nicht. Insbesondere ist der optische Schalter derart vorgesehen, dass daraufhin geprüft wird, ob eine Verbindung zwischen dem ersten Netzelement einerseits und dem weiteren übergeordneten Netzknoten hergestellt werden muss (d.h. ein Fehlerfallbetriebsmodus im Sinne der vorliegenden Erfindung vorliegt). In einem solchen Fall wird (für den Fall, dass das erste Netzelement im Normalbetriebsmodus lediglich mit dem ersten übergeordneten Netzknoten verbunden ist) ein Verlust oder Ausfall des vom ersten übergeordneten Netzknoten stammenden Signals detektiert und der optische Schalter derart angesteuert, dass eine Umschaltung der Datenübertragung - anstelle vom und/oder zum ersten übergeordneten Netzknoten - vom und/oder zum weiteren übergeordneten Netzknoten erfolgt. Gemäß einer (alternativen oder kumulativen) Variante dieses betrachteten Falls (d.h. für den Fall, dass das erste Netzelement im Normalbetriebsmodus lediglich mit dem ersten übergeordneten Netzknoten verbunden ist), kann es auch vorgesehen sein, dass im Falle eines detektierten Verlusts oder Ausfalls des vom ersten übergeordneten Netzknoten stammenden Signals der optische Schalter derart angesteuert, dass eine Umschaltung der Datenübertragung - anstelle vom und/oder zum ersten übergeordneten Netzknoten - vom und/oder zum zweiten übergeordneten Netzknoten erfolgt. Gemäß einer Variante der vorliegenden Erfindung ist der optische Schalter ebenfalls derart vorgesehen, dass daraufhin geprüft wird, ob eine Verbindung zwischen dem ersten Netzelement einerseits und dem weiteren übergeordneten Netzknoten hergestellt werden muss (d.h. ein Fehlerfallbetriebsmodus im Sinne der vorliegenden Erfindung vorliegt); im Unterschied zur ersten betrachteten Situation wird jedoch der Fall betrachtet, dass das erste Netzelement im Normalbetriebsmodus sowohl mit dem ersten übergeordneten Netzknoten als auch mit dem zweiten übergeordneten Netzknoten verbunden ist. Somit wird gemäß einer solchen Variante ein Verlust oder Ausfall des oder eines vom ersten übergeordneten Netzknoten und/oder des oder eines vom zweiten übergeordneten Netzknoten stammenden Signals detektiert und der optische Schalter derart angesteuert, dass eine Umschaltung der Datenübertragung - anstelle vom und/oder zum ersten und/oder zweiten übergeordneten Netzknoten - vom und/oder zum weiteren übergeordneten Netzknoten erfolgt.

Gemäß einer weiteren Ausführungsform der Erfindung ist es vorgesehen, dass sich die Detektion des Verlusts oder des Ausfalls des vom ersten oder zweiten übergeordneten Netzknoten stammenden Signals auf eine Wellenlänge der im Wellenlängen-Multiplex-Betrieb benutzten Wellenlängen bezieht und sich die Umschaltung der Datenübertragung - vom und/oder zum weiteren übergeordneten Netzknoten oder vom und/oder zum zweiten oder ersten übergeordneten Netzknoten - auf die eine ausgefallene Wellenlänge oder auf die eine ausgefallene Wellenlänge sowie zusätzlich wenigstens eine weitere Wellenlänge der optischen Übertragungsstrecke bezieht.

Erfindungsgemäß ist es somit durch den optischen Schalter bevorzugt möglich, dass der Verlust eines (vom ersten und/oder zweiten übergeordneten Netzknoten stammenden) Signals detektiert wird und eine oder mehrere Wellenlängen (oder auch alle Wellenlängen einer benutzten Glasfaser) geschaltet werden.

Ferner ist es gemäß einer weiteren Ausführungsform der Erfindung vorgesehen, dass das Detektionsmittel ein Leistungsmonitor des vom ersten oder zweiten übergeordneten Netzknoten stammenden Signals ist.

Ein weiterer Gegenstand der vorliegenden Erfindung ist ein optisches Telekommunikationsnetz zur effizienteren Datenübertragung im Wellenlängen-Multiplex-Betrieb (WDM, wavelength division multiplex) von verschiedenen optischen Wellenlängen, wobei das optische Telekommunikationsnetz einen ersten übergeordneten Netzknoten, einen zweiten übergeordneten Netzknoten und ferner eine Mehrzahl von Netzelementen aufweist, wobei die Mehrzahl von Netzelementen wenigstens ein erstes Netzelement aufweist, wobei das optische Telekommunikationsnetz eine optische Übertragungsstrecke umfassend mehrere optische Übertragungskanäle aufweist, wobei in einem Normalbetriebsmodus des optischen Telekommunikationsnetzes der erste übergeordnete Netzknoten und das erste Netzelement mittels eines optischen Übertragungskanals der optischen Übertragungsstrecke und einer ersten IP-Schnittstelle des ersten Netzelements miteinander verbunden sind und/oder der zweite übergeordnete Netzknoten und das erste Netzelement mittels eines optischen Übertragungskanals der optischen Übertragungsstrecke und einer zweiten IP-Schnittstelle des ersten Netzelements miteinander verbunden sind, wobei das optische Telekommunikationsnetz ferner einen weiteren übergeordneten Netzknoten aufweist, wobei das optische Telekommunikationsnetz derart konfiguriert ist, dass in einem Fehlerfallbetriebsmodus - anstelle des ersten oder zweiten übergeordneten Netzknotens - der weitere übergeordnete Netzknoten und das erste Netzelement mittels der optischen Übertragungsstrecke und entweder der ersten IP-Schnittstelle und/oder der zweiten IP-Schnittstelle des ersten Netzelements miteinander verbunden sind.

Es ist hierdurch erfindungsgemäß - auch mit Bezug auf das optische Telekommunikationsnetz - vorteilhaft möglich, dass wenigstens entweder die erste IP-Schnittstelle oder die zweite IP-Schnittstelle sowohl im Normalbetriebsmodus des optischen Telekommunikationsnetzes als auch in wenigstens einem Fehlerfallbetriebsmodus verwendet wird (bzw. sowohl die erste IP-Schnittstelle als auch die zweite IP-Schnittstelle in beiden Betriebsmodi verwendet werden). Hierdurch ist es somit erfindungsgemäß vorteilhaft möglich, teure IP-Schnittstellen für Netzelemente einzusparen, weil an den Netzelementen nicht solche IP-Schnittstellen vorgesehen sein müssen, die dezidiert nur für den Normalbetriebsmodus vorhanden sind, und zusätzlich solche IP-Schnittstellen vorgesehen sein müssen, die dezidiert nur für einen Fehlerfallbetriebsmodus (bzw. sogar für jeden zu betrachtenden Fehlerfallbetriebsmodus) vorhanden sind.

Ferner ist es gemäß einer Ausführungsform der Erfindung - auch mit Bezug auf das optische Telekommunikationsnetz - vorgesehen, dass der erste und/oder zweite übergeordnete Netzknoten wenigstens einen optischen Schalter zur Umschaltung zwischen dem Normalbetriebsmodus und dem Fehlerfallbetriebsmodus aufweist, wobei das optische Telekommunikationsnetz neben dem Fehlerfallbetriebsmodus wenigstens einen weiteren Fehlerfallbetriebsmodus aufweist.

Ferner ist es gemäß einer weiteren Ausführungsform der Erfindung - auch mit Bezug auf das optische Telekommunikationsnetz - vorgesehen, dass der wenigstens eine optische Schalter ein Detektionsmittel zur Detektion des Verlusts oder des Ausfalls eines vom ersten übergeordneten Netzknoten und/oder vom zweiten übergeordneten Netzknoten stammenden Signals aufweist, wobei im Fall der Detektion des Verlusts oder des Ausfalls des vom ersten übergeordneten Netzknoten stammenden Signals der wenigstens eine optische Schalter derart angesteuert wird, dass eine Umschaltung der Datenübertragung - anstelle vom und/oder zum ersten übergeordneten Netzknoten - vom und/oder zum weiteren übergeordneten Netzknoten oder vom und/oder zum zweiten übergeordneten Netzknoten erfolgt, oder wobei im Fall der Detektion des Verlusts oder des Ausfalls des vom zweiten übergeordneten Netzknoten stammenden Signals der wenigstens eine optische Schalter derart angesteuert wird, dass eine Umschaltung der Datenübertragung - anstelle vom und/oder zum zweiten übergeordneten Netzknoten - vom und/oder zum weiteren übergeordneten Netzknoten oder vom und/oder zum ersten übergeordneten Netzknoten erfolgt.

Weiterhin ist gemäß einer weiteren Ausführungsform der Erfindung - auch mit Bezug auf das optische Telekommunikationsnetz - vorgesehen, dass sich die Detektion des Verlusts oder des Ausfalls des vom ersten oder zweiten übergeordneten Netzknoten stammenden Signals auf eine Wellenlänge der im Wellenlängen-Multiplex-Betrieb benutzten Wellenlängen bezieht und sich die Umschaltung der Datenübertragung - vom und/oder zum weiteren übergeordneten Netzknoten oder vom und/oder zum zweiten oder ersten übergeordneten Netzknoten - sich auf die eine ausgefallene Wellenlänge oder auf die eine ausgefallene Wellenlänge sowie zusätzlich wenigstens eine weitere Wellenlänge der optischen Übertragungsstrecke bezieht und/oder dass das Detektionsmittel ein Leistungsmonitor des vom ersten oder zweiten übergeordneten Netzknoten stammenden Signals ist.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung und/oder einem übergeordneten Netzknoten ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung und/oder einem übergeordneten Netzknoten ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

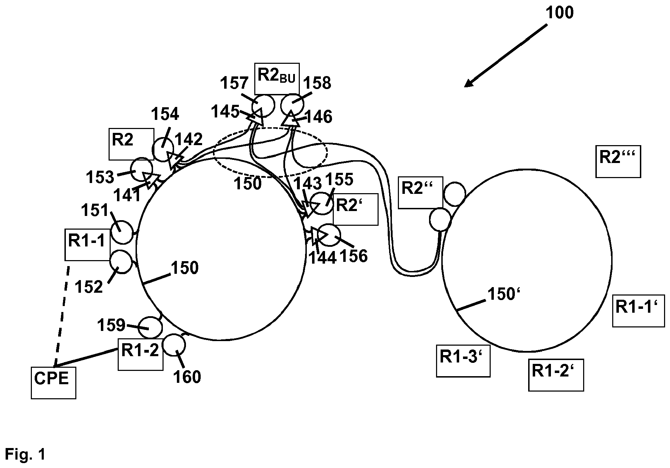

- **Figur 1**: zeigt eine schematische Ansicht eines beispielhaften optischen Telekommunikationsnetzes bzw. einer optischen Übertragungsstrecke mit einem ersten übergeordneten Netzknoten, einem zweiten übergeordneten Netzknoten sowie mit einem weiteren übergeordneten Netzknoten.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist schematisch eine Ansicht eines beispielhaften optischen Telekommunikationsnetzes 100, welches eine ringförmig geschlossene optische Übertragungsstrecke 150 aufweist, dargestellt. In der beispielhaften Darstellung gemäß Figur 1 weist das optische Telekommunikationsnetz 100 (in einem auf der linken Seite der Figur 1 dargestellten Teil) einen ersten übergeordneten Netzknoten R2, einem zweiten übergeordneten Netzknoten R2', einen weiteren übergeordneten Netzknoten R2_{BU} sowie ein erstes Netzelement R1-1 und ein zweites Netzelement R1-2 auf. Im rechten Teil der Figur 1 sind weitere Elemente des Telekommunikationsnetzes 100, insbesondere, insbesondere eine zusätzliche optische Übertragungsstrecke 150', zusätzliche übergeordnete Netzknoten R2", R2"', sowie zusätzliche Netzelemente R1-1', R1-2', R1-3' schematisch dargestellt, für die sinngemäß das Gleiche gilt wie für die nachfolgend näher beschriebenen und auf der linken Seite der Figur dargestellten Anteile bzw. Komponenten des Telekommunikationsnetzes 100. Exemplarisch ist in Figur 1 ferner auch eine Endnutzereinrichtung (etwa im Sinne einer "Customer Premises Equipment", CPE; etwa eine Routereinrichtung eines Endkunden) dargestellt und schematisch als mit dem ersten Netzelement R1-1 (gestrichelte Linie) bzw. mit dem zweiten Netzelement (R1-2) (durchgezogene Linie) verbunden dargestellt.

In der beispielhaften Darstellung der Figur 1 ist schematisch ein Beispiel der zweiten, oben betrachteten Situation bzw. alternativen Ausführungsform eines erfindungsgemäßen Telekommunikationsnetzes dargestellt, d.h. einer Konfiguration des optischen Telekommunikationsnetzes mit der ringförmig geschlossenen optischen Übertragungsstrecke 150, die den ersten übergeordneten Netzknoten R2, den zweiten übergeordneten Netzknoten R2' und den weiteren übergeordneten Netzknoten R2_{BU} aufweist. Durch den in dieser Konfiguration vorgesehenen Ringschluss ist es möglich, dass es auch einem Fehlerfall (etwa ein Faserbruch) innerhalb eines solchen Rings einen (nicht fehlerbehafteten) Weg zur Durchführung der Datenübertragung zwischen der jeweiligen Quelle der Daten und dem jeweiligen Ziel der Daten (d.h. zwischen dem ersten Netzelement R1-1 einerseits und entweder dem ersten übergeordneten Netzknoten R2 oder aber dem zweiten übergeordneten Netzknoten R2' andererseits) gibt. Alternativ zu dieser Darstellung (auf der linken Seite der Figur 1) ist es erfindungsgemäß jedoch auch möglich (jedoch in Figur 1 nicht dargestellt), dass das Telekommunikationsnetz 100 im Bereich der optischen Übertragungsstrecke 150 lediglich den ersten übergeordneten Netzknoten R2 (und somit nicht den zweiten übergeordneten Netzknoten R2') neben dem weiteren übergeordneten Netzknoten R2_{BU} aufweist. Der auf der rechten Seite der Figur 1 dargestellte Teil des Telekommunikationsnetzes 100 ist erfindungsgemäß insbesondere analog zur Ausbildung auf der linken Seite vorgesehen, d.h. in der beispielhaften Darstellung gemäß Figur 1 ebenfalls mit einer zusätzlichen ringförmig geschlossenen optischen Übertragungsstrecke 150', wobei alternativ hierzu (jedoch ebenfalls nicht dargestellt) auch eine Ausführung mit lediglich einem zusätzlichen übergeordneten Netzknoten (anstelle von zwei zusätzlichen übergeordneten Netzknoten) möglich ist.

Das erste Netzelement R1-1 weist eine erste IP-Schnittstelle 151 und eine zweite IP-Schnittstelle 152 auf. Der erste übergeordnete Netzknoten R2 weist eine dritte IP-Schnittstelle 153 und eine vierte IP-Schnittstelle 154 auf. Der zweite übergeordnete Netzknoten R2' weist eine fünfte IP-Schnittstelle 155 und eine sechste IP-Schnittstelle 156 auf. Der weitere übergeordnete Netzknoten R2_{BU} weist eine siebte IP-Schnittstelle 157 und eine achte IP-Schnittstelle 158 auf. Das zweite Netzelement R1-2 weist eine neunte IP-Schnittstelle 159 und eine zehnte IP-Schnittstelle 160 auf. Ferner weist der erste übergeordnete Netzknoten R2 einen mit der dritten IP-Schnittstelle 153 verbundenen bzw. mit dieser zusammenwirkenden bzw. korrespondierenden ersten optischen Schalter 141 und einen mit der vierten IP-Schnittstelle 154 verbundenen bzw. mit dieser zusammenwirkenden bzw. korrespondierenden zweiten optischen Schalter 142 auf. Weiterhin weist der zweite übergeordnete Netzknoten R2' einen mit der fünften IP-Schnittstelle 155 verbundenen bzw. mit dieser zusammenwirkenden bzw. korrespondierenden dritten optischen Schalter 143 und einen mit der sechsten IP-Schnittstelle 156 verbundenen bzw. mit dieser zusammenwirkenden bzw. korrespondierenden vierten optischen Schalter 144 auf. Ferner weist der weitere übergeordnete Netzknoten R2_{BU} einen mit der siebten IP-Schnittstelle 157 verbundenen bzw. mit dieser zusammenwirkenden bzw. korrespondierenden fünften optischen Schalter 145 und einen mit der achten IP-Schnittstelle 158 verbundenen bzw. mit dieser zusammenwirkenden bzw. korrespondierenden sechsten optischen Schalter 146 auf.

Durch den oder die optischen Schalter 141, 142, 143, 144, 145, 146 (welche auch als optische Schalterkomponenten 141, 142, 143, 144, 145, 146 eines mehrere solcher optischer Schalterkomponenten 141, 142, 143, 144, 145, 146 umfassenden optischen Schalters ausgebildet sein können), welche insbesondere als intelligente optische Schalter bzw. Schalterkomponenten ausgeführt sind, ist es erfindungsgemäß möglich, dass ein Signalverlust von einem der übergeordneten Netzknoten R2, R2', R2_{BU} detektiert wird. Falls eine solche Situation an einem der übergeordneten Netzknoten R2, R2', R2_{BU} oder an einem der Netzelemente R1-1, R1-2 erkannt und ein entsprechender optischer Schalter 141, 142, 143, 144, 145, 146 bzw. eine optische Schalterkomponente 141, 142, 143, 144, 145, 146 betätigt bzw. getriggert wird, wird durch den intelligenten optischen Schalter ein alternativer (insbesondere optischer) Pfad (zu einem anderen Router bzw. übergeordneten Netzknoten) aktiviert. Erfindungsgemäß kann dieser Umschaltvorgang zur Realisierung eines alternativen, insbesondere optischen, Pfades für eine einzige im Wellenlängen-Multiplex-Betrieb (WDM, wavelength division multiplex) benutzte Wellenlänge (bzw. "Farbe") oder für eine Mehrzahl von solchen Wellenlängen (bzw. "Farben") erfolgen oder aber für eine komplette Faser erfolgen. Gemäß eines rein exemplarischen Beispiels mag (bei Ausfall etwa des ersten übergeordneten Netzknotens R2 (oder eines Teils davon)) der erste optische Schalter 141 und/oder der zweite optische Schalter 142 derart betätigt bzw. getriggert werden, dass der korrespondierende Datenverkehr (etwa vom ersten Netzelement R1-1 kommend oder dorthin gehend oder aber auch vom zweiten Netzelement R1-2 kommend oder dorthin gehend) zum weiteren übergeordneten Netzknoten R2_{BU} geleitet wird. In diesem Fall würde der eingangsseitig beim weiteren übergeordneten Netzknoten R2_{BU} vorhandene fünfte optische Schalter 145 und/oder der sechste optische Schalter 146 das einkommende Signal erkennen und den lokalen link (d.h. die lokale siebte IP-Schnittstelle 157 und/oder die lokale achte IP-Schnittstelle 158) aktivieren.

Erfindungsgemäß umfasst die optische Übertragungsstrecke 150 optische Übertragungskapazitäten zwischen sämtlichen miteinander (direkt oder indirekt) verbundenen Netzelementen R1-1, R1-2 bzw. den übergeordneten Netzknoten R2, R2', R2_{BU} auf bzw. weist die zusätzliche optische Übertragungsstrecke 150' optische Übertragungskapazitäten zwischen sämtlichen miteinander (direkt oder indirekt) verbundenen Netzelementen R1-1', R1-2', R1-3'bzw. den übergeordneten Netzknoten R2_{BU}, R2", R2'" auf. In der dargestellten Ausführungsvariante gemäß der Figur 1 ist ein Teil der optischen Übertragungsstrecke 150 als im linken Teil der Darstellung ringförmig geschlossene optische Übertragungsstrecke zwischen dem ersten Netzelement R1-1, dem ersten übergeordneten Netzknoten R2 und dem zweiten übergeordneten Netzknoten R2' vorgesehen (ebenso wie dies in analoger Weise auch im rechten Teil der Darstellung gemäß Figur 1 für die zusätzliche optische Übertragungsstrecke 150' (bzw. den rechten Teil der optischen Übertragungsstrecke 150) zwischen den zusätzlichen Netzelementen R1-1', R1-2', R1-3' und den zusätzlichen übergeordneten Netzknoten R2", R2'"vorgesehen ist).

Erfindungsgemäß kann der weitere übergeordnete Netzknoten R2_{BU} entweder ein dezidierter Netzknoten sein oder aber redundanter Kapazität (im Sinne etwa von weiteren, im Normalbetriebsmodus nicht genutzter IP-Schnittstellen) eines beliebigen anderen übergeordneten Netzknotens entsprechen.

Da die IP-Schnittstellen (siebte und achte IP-Schnittstelle 157, 158) des weiteren übergeordneten Netzknotens R2_{BU} im Normalbetriebsmodus nicht aktiviert sind, kann jede IP-Adresse des korrespondierenden (insbesondere ersten) übergeordneten Netzknotens R2 konfiguriert bleiben. Falls dann der optische Pfad geändert wird, werden die jeweiligen IP-Schnittstellen des weiteren übergeordneten Netzknotens R2_{BU} aktiviert und das Routingprotokoll beginnt die Routingtabelle aufzubauen. Nachdem dies erfolgt ist (d.h. das Routingprotokoll konvergiert ist bzw. wurde) kann das optische Telekommunikationsnetz 100 wieder mit voller Kapazität arbeiten.

Wenn zu einem späteren Zeitpunkt der ersten übergeordnete Netzknoten R2_{BU} wieder verwendbar ist, werden die optischen Verbindungen wieder zurückgeschaltet - entweder automatisch oder manuell - so dass der weitere übergeordnete Netzknoten R2_{BU} wieder für andere Netzknoten-Ausfälle zur Verfügung steht.

Erfindungsgemäß ist es in besonders vorteilhafter Weise möglich, dass die IP-Schnittstellen 141, 142, 143, 144, 145, 146 durch eine SDN-Steuereinheit (in Figur 1 nicht dargestellt) gesteuert werden (SDN controller, Software Defined Network controller): Falls irgendeine Fehlersituation des Datenverkehrs detektiert wird - was auch das Resultat eines über die optische Ebene hinausgehenden Ausfalls sein kann - ist es auf diese Weise in vorteilhafter Weise möglich, dass die SDN-Steuereinheit die oben ausgeführte optische Umschaltung (bzw. Umschaltung des oder der eingangsseitig am weiteren übergeordneten Netzknoten R2_{BU} vorhandenen optischen Schalter 145, 146) initiiert, indem der oder die entsprechende(n) optische(n) Schalter (insbesondere die eingangsseitigen am weiteren übergeordneten Netzknoten R2_{BU} vorhandenen optischen Schalter 145, 146) entsprechend umgeschaltet werden. Parallel kann der Ersatzrouter (d.h. der weitere übergeordnete Netzknoten R2_{BU}) konfiguriert werden. Hierdurch kann der die Konfiguration des weiteren übergeordneten Netzknotens R2_{BU} sehr viel einfacher und schlanker gehalten werden.

Bei einem herkömmlichen optischen Telekommunikationsnetz 100 ist es in der Regel vorgesehen, dass 100% Redundanz vorgesehen bzw. vorgehalten werden muss, falls auch in einem Fehlerbetriebszustand 100% der Kapazität bereitgestellt werden soll (d.h. wenn durch den Fehlerzustand keine Beeinträchtigung des Datenverkehrs stattfinden soll); mithin bedeutet dies, dass Netzwerk-Komponenten gekauft werden müssen, die 200% der Kapazität abdecken. Dies kann erfindungsgemäß erheblich reduziert werden, indem die Hälfte der Reservekapazität unter allen übergeordneten Netzknoten (core routers) geteilt wird - jedenfalls gegenüber einem Szenario, bei dem die Reservekapazität in dezentraler Weise auf jedem der übergeordneten Netzknoten installiert wird. Der Einsparungseffekt hängt davon ab, wie viele übergeordnete Netzknoten miteinander in einem Redundanzverband verbunden (bzw. geclustert) werden. In Abhängigkeit von Datenpaketlatenzzeiten und/oder des existierenden Fasergraphs (bzw. der optischen Netzwerktopologie) kann mehr als ein weiterer übergeordneter Netzknoten (d.h. neben dem weiteren übergeordneten Netzknoten R2_{BU} ein zusätzlicher weiterer übergeordneter Netzknoten (nicht in Figur 1 dargestellt)) als redundanter Netzknoten für eine Anzahl von übergeordneten Netzknoten (bzw. für ein Netzknoten-Cluster) verwendet werden. Jeder weitere übergeordnete Netzknoten R2_{BU} weist insbesondere genügend freie IP-Schnittstellen auf, um den größtmöglichen Ausfall von übergeordneten Netzknoten im Telekommunikationsnetz 100 abdecken zu können. Ferner ist der weitere übergeordnete Netzknoten R2_{BU} bevorzugt in das vermaschte Telekommunikationsnetz 100 derart integriert, dass eine ausreichende Übertragungskapazität vorliegt, um die Bedienung bzw. Gewährleistung der Verkehrbedarfe im Zugangsnetz zu gewährleisten.

Gegenüber einem Zugangsnetz ist es erfindungsgemäß bevorzugt, wenn der weitere übergeordnete Netzknoten insbesondere der Größe des Kehrwerts der Größe der optischen Cluster der (IP-)Schnittstellenkapazität entspricht oder wenn der weitere übergeordnete Netzknoten dieselbe Größe hat, wie der größte der übergeordneten Netzknoten des Clusters.

## Patentansprüche

1. Verfahren zur effizienteren Datenübertragung in einem optischen Telekommunikationsnetz (100) im Wellenlängen-Multiplex-Betrieb, WDM, wavelength division multiplex, von verschiedenen optischen Wellenlängen, wobei das optische Telekommunikationsnetz (100) einen ersten übergeordneten Netzknoten (R2), einen zweiten übergeordneten Netzknoten (R2') und ferner wenigstens ein erstes Netzelement (R1-1) aufweist, wobei das optische Telekommunikationsnetz (100) eine optische Übertragungsstrecke (150) umfassend mehrere optische Übertragungskanäle aufweist, wobei in einem Normalbetriebsmodus des optischen Telekommunikationsnetzes (100) der erste übergeordnete Netzknoten (R2) und das erste Netzelement (R1-1) mittels eines optischen Übertragungskanals der optischen Übertragungsstrecke (150) und einer ersten IP-Schnittstelle (151) des ersten Netzelements (R1-1) miteinander verbunden sind und/oder der zweite übergeordnete Netzknoten (R2') und das erste Netzelement (R1-1) mittels eines optischen Übertragungskanals der optischen Übertragungsstrecke (150) und einer zweiten IP-Schnittstelle (152) des ersten Netzelements (R1-1) miteinander verbunden sind, wobei das optische Telekommunikationsnetz (100) ferner einen weiteren übergeordneten Netzknoten (R2_{BU}) aufweist, **dadurch gekennzeichnet, dass** das Verfahren den Schritt aufweist, dass in einem Fehlerfallbetriebsmodus - anstelle des ersten oder zweiten übergeordneten Netzknotens (R2, R2') - der weitere übergeordnete Netzknoten (R2_{BU}) und das erste Netzelement (R1-1) mittels der optischen Übertragungsstrecke (150) und entweder der ersten IP-Schnittstelle (151) und/oder der zweiten IP-Schnittstelle (152) des ersten Netzelements (R1-1) miteinander verbunden werden, wobei wenigstens entweder die erste IP-Schnittstelle (151) oder die zweite IP-Schnittstelle (152) sowohl im Normalbetriebsmodus des optischen Telekommunikationsnetzes (100) als auch in dem Fehlerfallbetriebsmodus verwendet wird.

2. Verfahren nach Anspruch 1, **dadurch gekennzeichnet, dass** der erste und/oder zweite übergeordnete Netzknoten (R2, R2') wenigstens einen optischen Schalter (141, 142, 143, 144) zur Umschaltung zwischen dem Normalbetriebsmodus und dem Fehlerfallbetriebsmodus aufweist oder der erste und/oder zweite übergeordnete Netzknoten (R2, R2') mit einem optischen Schalter (141, 142, 143, 144) zur Umschaltung zwischen dem Normalbetriebsmodus und dem Fehlerfallbetriebsmodus verbunden oder diesem zugeordnet ist.

3. Verfahren nach einem der vorhergehenden Ansprüche, **dadurch gekennzeichnet, dass** der wenigstens eine optische Schalter (141, 142, 143, 144) ein Detektionsmittel zur Detektion des Verlusts oder des Ausfalls eines vom ersten übergeordneten Netzknoten (R2) und/oder vom zweiten übergeordneten Netzknoten (R2') stammenden Signals aufweist, wobei im Fall der Detektion des Verlusts oder des Ausfalls des vom ersten übergeordneten Netzknoten (R2) stammenden Signals der wenigstens eine optische Schalter (141, 142, 143, 144) derart angesteuert wird, dass eine Umschaltung der Datenübertragung - anstelle vom und/oder zum ersten übergeordneten Netzknoten (R2) - vom und/oder zum weiteren übergeordneten Netzknoten (R2_{BU}) oder vom und/oder zum zweiten übergeordneten Netzknoten (R2') erfolgt, oder wobei im Fall der Detektion des Verlusts oder des Ausfalls des vom zweiten übergeordneten Netzknoten (R2') stammenden Signals der wenigstens eine optische Schalter (141, 142, 143, 144) derart angesteuert wird, dass eine Umschaltung der Datenübertragung - anstelle vom und/oder zum zweiten übergeordneten Netzknoten (R2') - vom und/oder zum weiteren übergeordneten Netzknoten (R2_{BU}) oder vom und/oder zum ersten übergeordneten Netzknoten (R2) erfolgt.

4. Verfahren nach einem der vorhergehenden Ansprüche, **dadurch gekennzeichnet, dass** sich die Detektion des Verlusts oder des Ausfalls des vom ersten oder zweiten übergeordneten Netzknoten (R2, R2') stammenden Signals auf eine Wellenlänge der im Wellenlängen-Multiplex-Betrieb benutzten Wellenlängen bezieht und sich die Umschaltung der Datenübertragung - vom und/oder zum weiteren übergeordneten Netzknoten (R2_{BU}) oder vom und/oder zum zweiten oder ersten übergeordneten Netzknoten (R2', R2) - sich auf die eine ausgefallene Wellenlänge oder auf die eine ausgefallene Wellenlänge sowie zusätzlich wenigstens eine weitere Wellenlänge der optischen Übertragungsstrecke (150) bezieht.

5. Verfahren nach einem der vorhergehenden Ansprüche, **dadurch gekennzeichnet, dass** das Detektionsmittel ein Leistungsmonitor des vom ersten oder zweiten übergeordneten Netzknoten (R2, R2') stammenden Signals ist.

6. Optisches Telekommunikationsnetz (100) zur effizienteren Datenübertragung im Wellenlängen-Multiplex-Betrieb, WDM, wavelength division multiplex, von verschiedenen optischen Wellenlängen, wobei das optische Telekommunikationsnetz (100) einen ersten übergeordneten Netzknoten (R2), einen zweiten übergeordneten Netzknoten (R2') und ferner wenigstens ein erstes Netzelement (R1-1) aufweist, wobei das optische Telekommunikationsnetz (100) eine optische Übertragungsstrecke (150) umfassend mehrere optische Übertragungskanäle aufweist, wobei in einem Normalbetriebsmodus des optischen Telekommunikationsnetzes (100) der erste übergeordnete Netzknoten (R2) und das erste Netzelement (R1-1) mittels eines optischen Übertragungskanals der optischen Übertragungsstrecke (150) und einer ersten IP-Schnittstelle (151) des ersten Netzelements (R1-1) miteinander verbunden sind und/oder der zweite übergeordnete Netzknoten (R2') und das erste Netzelement (R1-1) mittels eines optischen Übertragungskanals der optischen Übertragungsstrecke (150) und einer zweiten IP-Schnittstelle (152) des ersten Netzelements (R1-1) miteinander verbunden sind, wobei das optische Telekommunikationsnetz (100) ferner einen weiteren übergeordneten Netzknoten (R2_{BU}) aufweist, **dadurch gekennzeichnet, dass** das optische Telekommunikationsnetz (100) derart konfiguriert ist, dass in einem Fehlerfallbetriebsmodus - anstelle des ersten oder zweiten übergeordneten Netzknotens (R2, R2') - der weitere übergeordnete Netzknoten (R2_{BU}) und das erste Netzelement (R1-1) mittels der optischen Übertragungsstrecke (150) und entweder der ersten IP-Schnittstelle (151) und/oder der zweiten IP-Schnittstelle (152) des ersten Netzelements (R1-1) miteinander verbunden sind, wobei das optischen Telekommunikationsnetz (100) derart konfiguriert ist, dass wenigstens entweder die erste IP-Schnittstelle (151) oder die zweite IP-Schnittstelle (152) sowohl im Normalbetriebsmodus des optischen Telekommunikationsnetzes (100) als auch in dem Fehlerfallbetriebsmodus verwendet wird.

7. Optisches Telekommunikationsnetz (100) nach Anspruch 6, **dadurch gekennzeichnet, dass** der erste und/oder zweite übergeordnete Netzknoten (R2, R2') wenigstens einen optischen Schalter (141, 142, 143, 144) zur Umschaltung zwischen dem Normalbetriebsmodus und dem Fehlerfallbetriebsmodus aufweist, wobei das optische Telekommunikationsnetz (100) neben dem Fehlerfallbetriebsmodus wenigstens einen weiteren Fehlerfallbetriebsmodus aufweist.

8. Optisches Telekommunikationsnetz (100) nach einem der Ansprüche 6 oder 7, **dadurch gekennzeichnet, dass** der wenigstens eine optische Schalter (141, 142, 143, 144) ein Detektionsmittel zur Detektion des Verlusts oder des Ausfalls eines vom ersten übergeordneten Netzknoten (R2) und/oder vom zweiten übergeordneten Netzknoten (R2') stammenden Signals aufweist, wobei im Fall der Detektion des Verlusts oder des Ausfalls des vom ersten übergeordneten Netzknoten (R2) stammenden Signals der wenigstens eine optische Schalter (141, 142, 143, 144) derart angesteuert wird, dass eine Umschaltung der Datenübertragung - anstelle vom und/oder zum ersten übergeordneten Netzknoten (R2) - vom und/oder zum weiteren übergeordneten Netzknoten (R2_{BU}) oder vom und/oder zum zweiten übergeordneten Netzknoten (R2') erfolgt, oder wobei im Fall der Detektion des Verlusts oder des Ausfalls des vom zweiten übergeordneten Netzknoten (R2') stammenden Signals der wenigstens eine optische Schalter (141, 142, 143, 144) derart angesteuert wird, dass eine Umschaltung der Datenübertragung - anstelle vom und/oder zum zweiten übergeordneten Netzknoten (R2') - vom und/oder zum weiteren übergeordneten Netzknoten (R2_{BU}) oder vom und/oder zum ersten übergeordneten Netzknoten (R2) erfolgt.

9. Optisches Telekommunikationsnetz (100) nach einem der Ansprüche 6, 7 oder 8, **dadurch gekennzeichnet, dass** sich die Detektion des Verlusts oder des Ausfalls des vom ersten oder zweiten übergeordneten Netzknoten (R2, R2') stammenden Signals auf eine Wellenlänge der im Wellenlängen-Multiplex-Betrieb benutzten Wellenlängen bezieht und sich die Umschaltung der Datenübertragung - vom und/oder zum weiteren übergeordneten Netzknoten (R2_{BU}) oder vom und/oder zum zweiten oder ersten übergeordneten Netzknoten (R2', R2) - sich auf die eine ausgefallene Wellenlänge oder auf die eine ausgefallene Wellenlänge sowie zusätzlich wenigstens eine weitere Wellenlänge der optischen Übertragungsstrecke (150) bezieht.

10. Optisches Telekommunikationsnetz (100) nach einem der Ansprüche 6, 7 oder 8, **dadurch gekennzeichnet, dass** das Detektionsmittel ein Leistungsmonitor des vom ersten oder zweiten übergeordneten Netzknoten (R2, R2') stammenden Signals ist.

11. Computerprogramm mit Programmcodemitteln, mit deren Hilfe alle Schritte eines Verfahrens nach einem der Ansprüche 1 bis 5 durchführbar sind, wenn das Computerprogramm auf einer programmierbaren Einrichtung und/oder einem übergeordneten Netzknoten (R2) ausgeführt wird.

12. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 5 durchführbar sind, wenn das Computerprogramm auf einer programmierbaren Einrichtung und/oder einem übergeordneten Netzknoten (R2) ausgeführt wird.

## Claims

1. Method for more efficient data transmission in an optical telecommunication network (100) in wavelength division multiplex, WDM, operation of different optical wavelengths, wherein the optical telecommunication network (100) comprises a first superordinate network node (R2), a second superordinate network node (R2') and further at least one first network element (R1-1), wherein the optical telecommunication network (100) comprises an optical transmission path (150) comprising a plurality of optical transmission channels, wherein in a normal operating mode of the optical telecommunication network (100), the first superordinate network node (R2) and the first network element (R1-1) are connected to one another by means of an optical transmission channel of the optical transmission path (150) and a first IP interface (151) of the first network element (R1-1), and/or the second superordinate network node (R2') and the first network element (R1-1) are connected to one another by means of an optical transmission channel of the optical transmission path (150) and a second IP interface (152) of the first network element (R1-1), wherein the optical telecommunication network (100) further comprises a further superordinate network node (R2_{BU}), **characterised in that** the method comprises the step that, in a fault operating mode - instead of the first or second superordinate network node (R2, R2') - the further superordinate network node (R2_{BU}) and the first network element (R1-1) are connected to one another by means of the optical transmission path (150) and either the first IP interface (151) and/or the second IP interface (152) of the first network element (R1-1), wherein at least either the first IP interface (151) or the second IP interface (152) is used both in the normal operating mode of the optical telecommunication network (100) and in the fault operating mode.

2. Method as claimed in claim 1, **characterised in that** the first and/or second superordinate network node (R2, R2') has at least one optical switch (141, 142, 143, 144) for switching between the normal operating mode and the fault operating mode, or the first and/or second superordinate network node (R2, R2') is connected to or allocated to an optical switch (141, 142, 143, 144) for switching between the normal operating mode and the fault operating mode.

3. Method as claimed in any one of the preceding claims, **characterised in that** the at least one optical switch (141, 142, 143, 144) has a detection means for detecting the loss or the failure of a signal originating from the first superordinate network node (R2) and/or from the second superordinate network node (R2'), wherein, in the case of the detection of the loss or the failure of the signal originating from the first superordinate network node (R2), the at least one optical switch (141, 142, 143, 144) is actuated in such a manner that the data transmission is switched - instead of from and/or to the first superordinate network node (R2) - from and/or to the further superordinate network node (R2_{BU}) or from and/or to the second superordinate network node (R2'), or wherein in the case of the detection of the loss or the failure of the signal originating from the second superordinate network node (R2') the at least one optical switch (141, 142, 143, 144) is actuated in such a way that the data transmission is switched - instead of from and/or to the second superordinate network node (R2') - from and/or to the further superordinate network node (R2_{BU}) or from and/or to the first superordinate network node (R2).

4. Method as claimed in any one of the preceding claims, **characterised in that** the detection of the loss or the failure of the signal originating from the first or second superordinate network node (R2, R2') relates to a wavelength of the wavelengths used in wavelength division multiplex operation, and the switching of the data transmission - from and/or to the further superordinate network node (R2_{BU}) or from and/or to the second or first superordinate network node (R2', R2) - relates to the one failed wavelength or to the one failed wavelength and additionally at least one further wavelength of the optical transmission path (150).

5. Method as claimed in any one of the preceding claims, **characterised in that** the detection means is a power monitor of the signal originating from the first or second superordinate network node (R2, R2').

6. Optical telecommunication network (100) for more efficient data transmission in wavelength division multiplex, WDM, operation of different optical wavelengths, wherein the optical telecommunication network (100) comprises a first superordinate network node (R2), a second superordinate network node (R2') and further at least one first network element (R1-1), wherein the optical telecommunication network (100) comprises an optical transmission path (150) comprising a plurality of optical transmission channels, wherein in a normal operating mode of the optical telecommunication network (100), the first superordinate network node (R2) and the first network element (R1-1) are connected to one another by means of an optical transmission channel of the optical transmission path (150) and a first IP interface (151) of the first network element (R1-1), and/or the second superordinate network node (R2') and the first network element (R1-1) are connected to one another by means of an optical transmission channel of the optical transmission path (150) and a second IP interface (152) of the first network element (R1-1), wherein the optical telecommunication network (100) further comprises a further superordinate network node (R2_{BU}), **characterised in that** the optical telecommunication network (100) is configured in such a way that, in a fault operating mode - instead of the first or second superordinate network node (R2, R2') - the further superordinate network node (R2_{BU}) and the first network element (R1-1) are connected to one another by means of the optical transmission path (150) and either the first IP interface (151) and/or the second IP interface (152) of the first network element (R1-1), wherein the optical telecommunication network (100) is configured in such a way that at least either the first IP interface (151) or the second IP interface (152) is used both in the normal operating mode of the optical telecommunication network (100) and in the fault operating mode.

7. Optical telecommunication network (100) as claimed in claim 6, **characterised in that** the first and/or second superordinate network node (R2, R2') has at least one optical switch (141, 142, 143, 144) for switching between the normal operating mode and the fault operating mode, wherein the optical telecommunication network (100) has at least one further fault operating mode in addition to the fault operating mode.

8. Optical telecommunication network (100) as claimed in any one of claims 6 or 7, **characterised in that** the at least one optical switch (141, 142, 143, 144) has a detection means for detecting the loss or the failure of a signal originating from the first superordinate network node (R2) and/or from the second superordinate network node (R2'), wherein, in the case of the detection of the loss or the failure of the signal originating from the first superordinate network node (R2), the at least one optical switch (141, 142, 143, 144) is actuated in such a manner that the data transmission is switched - instead of from and/or to the first superordinate network node (R2) - from and/or to the further superordinate network node (R2_{BU}) or from and/or to the second superordinate network node (R2'), or wherein in the case of the detection of the loss or the failure of the signal originating from the second superordinate network node (R2') the at least one optical switch (141, 142, 143, 144) is actuated in such a way that the data transmission is switched - instead of from and/or to the second superordinate network node (R2') - from and/or to the further superordinate network node (R2_{BU}) or from and/or to the first superordinate network node (R2).

9. Optical telecommunication network (100) as claimed in any one of claims 6, 7 or 8, **characterised in that** the detection of the loss or the failure of the signal originating from the first or second superordinate network node (R2, R2') relates to a wavelength of the wavelengths used in wavelength division multiplex operation, and the switching of the data transmission - from and/or to the further superordinate network node (R2_{BU}) or from and/or to the second or first superordinate network node (R2', R2) - relates to the one failed wavelength or to the one failed wavelength and additionally at least one further wavelength of the optical transmission path (150).

10. Optical telecommunication network (100) as claimed in any one of claims 6, 7 or 8, **characterised in that** the detection means is a power monitor of the signal originating from the first or second superordinate network node (R2, R2').

11. Computer program having program code means, by means of which all of the steps of a method as claimed in any one of claims 1 to 5 can be performed when the computer program is executed on a programmable device and/or a superordinate network node (R2) .

12. Computer program product having a computer-readable medium and a computer program, stored on the computer-readable medium, having program code means which are suitable to be able to perform all of the steps of a method as claimed in any one of claims 1 to 5 when the computer program is executed on a programmable device and/or a superordinate network node (R2) .

## Revendications

1. Procédé pour une transmission de données plus efficace dans un réseau de télécommunication optique (100) en fonctionnement en multiplexage en longueur d'onde, WDM, wavelength division multiplex, de différentes longueurs d'onde optiques, dans lequel le réseau de télécommunication optique (100) présente un premier nœud de réseau de niveau supérieur (R2), un deuxième nœud de réseau de niveau supérieur (R2') et en outre au moins un premier élément de réseau (R1-1), dans lequel le réseau de télécommunication optique (100) présente une liaison de transmission optique (150) comprenant plusieurs canaux de transmission optique, dans lequel, dans un mode de fonctionnement normal du réseau de télécommunication optique (100), le premier nœud de réseau de niveau supérieur (R2) et le premier élément de réseau (R1-1) sont reliés entre eux au moyen d'un canal de transmission optique de la liaison de transmission optique (150) et d'une première interface IP (151) du premier élément de réseau (R1-1) et/ou le deuxième nœud de réseau de niveau supérieur (R2') et le premier élément de réseau (R1-1) sont reliés entre eux au moyen d'un canal de transmission optique de la liaison de transmission optique (150) et d'une deuxième interface IP (152) du premier élément de réseau (R1-1), dans lequel le réseau de télécommunication optique (100) présente en outre un autre nœud de réseau de niveau supérieur (R2_{BU}), **caractérisé en ce que** le procédé présente l'étape dans laquelle, dans un mode de fonctionnement en cas de défaut - au lieu du premier ou du deuxième nœud de réseau de niveau supérieur (R2, R2') - l'autre nœud de réseau de niveau supérieur (R2_{BU}) et le premier élément de réseau (R1-1) sont reliés entre eux au moyen de la liaison de transmission optique (150) et de la première interface IP (151) et/ou de la deuxième interface IP (152) du premier élément de réseau (Rl-1), dans lequel au moins soit la première interface IP (151), soit la deuxième interface IP (152) est utilisée aussi bien dans le mode de fonctionnement normal du réseau de télécommunication optique (100) que dans le mode de fonctionnement en cas de défaut.

2. Procédé selon la revendication 1, **caractérisé en ce que** le premier et/ou le deuxième nœud de réseau de niveau supérieur (R2, R2') présente au moins un commutateur optique (141, 142, 143, 144) pour la commutation entre le mode de fonctionnement normal et le mode de fonctionnement en cas de défaut ou le premier et/ou le deuxième nœud de réseau de niveau supérieur (R2, R2') est relié ou associé à un commutateur optique (141, 142, 143, 144) pour la commutation entre le mode de fonctionnement normal et le mode de fonctionnement en cas de défaut.

3. Procédé selon l'une des revendications précédentes, **caractérisé en ce que** ledit au moins un commutateur optique (141, 142, 143, 144) présente un moyen de détection pour détecter la perte ou la défaillance d'un signal provenant du premier nœud de réseau de niveau supérieur (R2) et/ou du deuxième nœud de réseau de niveau supérieur (R2'), dans lequel, en cas de détection de la perte ou de la défaillance du signal provenant du premier nœud de réseau de niveau supérieur (R2), ledit au moins un commutateur optique (141, 142, 143, 144) est actionné de telle sorte qu'une commutation de la transmission de données - au lieu de depuis et/ou vers le premier nœud de réseau de niveau supérieur (R2) - a lieu depuis et/ou vers l'autre nœud de réseau de niveau supérieur (R2_{BU}) ou depuis et/ou vers le deuxième nœud de réseau de niveau supérieur (R2'), ou dans lequel, en cas de détection de la perte ou de la défaillance du signal provenant du deuxième nœud de réseau de niveau supérieur (R2'), ledit au moins un commutateur optique (141, 142, 143, 144) est actionné de telle sorte qu'une commutation de la transmission de données - au lieu de depuis et/ou vers le deuxième nœud de réseau de niveau supérieur (R2') - a lieu depuis et/ou vers l'autre nœud de réseau de niveau supérieur (R2_{BU}) ou depuis et/ou vers le premier nœud de réseau de niveau supérieur (R2).

4. Procédé selon l'une des revendications précédentes, **caractérisé en ce que** la détection de la perte ou de la défaillance du signal provenant du premier ou du deuxième nœud de réseau de niveau supérieur (R2, R2') concerne une longueur d'onde des longueurs d'onde utilisées dans le fonctionnement en multiplexage en longueur d'onde et la commutation de la transmission de données - depuis et/ou vers l'autre nœud de réseau de niveau supérieur (R2_{BU}) ou depuis et/ou vers le deuxième ou le premier nœud de réseau de niveau supérieur (R2', R2) - concerne la longueur d'onde défaillante ou la longueur d'onde défaillante ainsi qu'en plus au moins une autre longueur d'onde de la liaison de transmission optique (150).

5. Procédé selon l'une des revendications précédentes, **caractérisé en ce que** le moyen de détection est un moniteur de puissance du signal provenant du premier ou du deuxième nœud de réseau de niveau supérieur (R2, R2').

6. Réseau de télécommunication optique (100) pour une transmission de données plus efficace en fonctionnement en multiplexage en longueur d'onde, WDM, wavelength division multiplex, de différentes longueurs d'onde optiques, dans lequel le réseau de télécommunication optique (100) présente un premier nœud de réseau de niveau supérieur (R2), un deuxième nœud de réseau de niveau supérieur (R2') et en outre au moins un premier élément de réseau (R1-1), dans lequel le réseau de télécommunication optique (100) présente une liaison de transmission optique (150) comprenant plusieurs canaux de transmission optique, dans lequel, dans un mode de fonctionnement normal du réseau de télécommunication optique (100), le premier nœud de réseau de niveau supérieur (R2) et le premier élément de réseau (R1-1) sont reliés entre eux au moyen d'un canal de transmission optique de la liaison de transmission optique (150) et d'une première interface IP (151) du premier élément de réseau (R1-1) et/ou le deuxième nœud de réseau de niveau supérieur (R2') et le premier élément de réseau (R1-1) sont reliés entre eux au moyen d'un canal de transmission optique de la liaison de transmission optique (150) et d'une deuxième interface IP (152) du premier élément de réseau (R1-1), dans lequel le réseau de télécommunication optique (100) présente en outre un autre nœud de réseau de niveau supérieur (R2_{BU}), **caractérisé en ce que** le réseau de télécommunication optique (100) est configuré de telle sorte que, dans un mode de fonctionnement en cas de défaut - au lieu du premier ou du deuxième nœud de réseau de niveau supérieur (R2, R2') - l'autre nœud de réseau de niveau supérieur (R2_{BU}) et le premier élément de réseau (R1-1) sont reliés entre eux au moyen de la liaison de transmission optique (150) et de la première interface IP (151) et/ou de la deuxième interface IP (152) du premier élément de réseau (Rl-1), dans lequel le réseau de télécommunication optique (100) est configuré de telle sorte qu'au moins soit la première interface IP (151), soit la deuxième interface IP (152) est utilisée aussi bien dans le mode de fonctionnement normal du réseau de télécommunication optique (100) que dans le mode de fonctionnement en cas de défaut.

7. Réseau de télécommunication optique (100) selon la revendication 6, **caractérisé en ce que** le premier et/ou le deuxième nœud de réseau de niveau supérieur (R2, R2') présente au moins un commutateur optique (141, 142, 143, 144) pour la commutation entre le mode de fonctionnement normal et le mode de fonctionnement en cas de défaut, dans lequel le réseau de télécommunication optique (100) présente au moins un autre mode de fonctionnement en cas de défaut en plus du mode de fonctionnement en cas de défaut.

8. Réseau de télécommunication optique (100) selon l'une des revendications 6 ou 7, **caractérisé en ce que** ledit au moins un commutateur optique (141, 142, 143, 144) présente un moyen de détection pour détecter la perte ou la défaillance d'un signal provenant du premier nœud de réseau de niveau supérieur (R2) et/ou du deuxième nœud de réseau de niveau supérieur (R2'), dans lequel, en cas de détection de la perte ou de la défaillance du signal provenant du premier nœud de réseau de niveau supérieur (R2), ledit au moins un commutateur optique (141, 142, 143, 144) est actionné de telle sorte qu'une commutation de la transmission de données - au lieu de depuis et/ou vers le premier nœud de réseau de niveau supérieur (R2) - a lieu depuis et/ou vers l'autre nœud de réseau de niveau supérieur (R2_{BU}) ou depuis et/ou vers le deuxième nœud de réseau de niveau supérieur (R2'), ou dans lequel, en cas de détection de la perte ou de la défaillance du signal provenant du deuxième nœud de réseau de niveau supérieur (R2'), ledit au moins un commutateur optique (141, 142, 143, 144) est actionné de telle sorte qu'une commutation de la transmission de données - au lieu de depuis et/ou vers le deuxième nœud de réseau de niveau supérieur (R2') - a lieu depuis et/ou vers l'autre nœud de réseau de niveau supérieur (R2_{BU}) ou depuis et/ou vers le premier nœud de réseau de niveau supérieur (R2).

9. Réseau de télécommunication optique (100) selon l'une des revendications 6, 7 ou 8, **caractérisé en ce que** la détection de la perte ou de la défaillance du signal provenant du premier ou du deuxième nœud de réseau de niveau supérieur (R2, R2') concerne une longueur d'onde des longueurs d'onde utilisées dans le fonctionnement en multiplexage en longueur d'onde et la commutation de la transmission de données - depuis et/ou vers l'autre nœud de réseau de niveau supérieur (R2_{BU}) ou depuis et/ou vers le deuxième ou le premier nœud de réseau de niveau supérieur (R2', R2) - concerne la longueur d'onde défaillante ou la longueur d'onde défaillante ainsi qu'en plus au moins une autre longueur d'onde de la liaison de transmission optique (150).

10. Réseau de télécommunication optique (100) selon l'une des revendications 6, 7 ou 8, **caractérisé en ce que** le moyen de détection est un moniteur de puissance du signal provenant du premier ou du deuxième nœud de réseau de niveau supérieur (R2, R2').

11. Programme d'ordinateur comprenant des moyens de code de programme à l'aide desquels toutes les étapes d'un procédé selon l'une des revendications 1 à 5 peuvent être mises en œuvre lorsque le programme d'ordinateur est exécuté sur un dispositif programmable et/ou un nœud de réseau de niveau supérieur (R2).

12. Produit programme d'ordinateur comprenant un support lisible par ordinateur et un programme d'ordinateur stocké sur le support lisible par ordinateur, comprenant des moyens de code de programme conçus pour permettre la mise en œuvre de toutes les étapes d'un procédé selon l'une des revendications 1 à 5 lorsque le programme d'ordinateur est exécuté sur un dispositif programmable et/ou un nœud de réseau de niveau supérieur (R2).
